# EUROPÄISCHE PATENTSCHRIFT

(11) **EP 2 447 056 B1**
(45) Veröffentlichungstag und Bekanntmachung des Hinweises auf die Patenterteilung: **15.07.2015**
(21) Anmeldenummer: 11008542.0
(22) Anmeldetag: 25.10.2011
(51) Int. Cl.: B32B 27/08, B32B 27/32, B32B 27/34, B65D 51/20

(54) **Leicht zu öffnende Verpackung**
Easily opened packaging
Emballage pouvant s'ouvrir facilement

(30) Priorität: 02.11.2010 DE 102010050022
(43) Veröffentlichungstag der Anmeldung: 02.05.2012
(73) Patentinhaber: Wipak Walsrode GmbH & Co. KG, 29699 Bomlitz (DE)
(72) Erfinder: Richards, Jaquie, 27374 Visselhövede (DE); Sperlich, Bernd, Dr., 29664 Walsrode (DE); Marter, Michael, 29614 Soltau (DE); Kaeding-Koppers, Annett, Dr., 29683 Bad Fallingbostel (DE)
(74) Vertreter: Kutzenberger, Helga

(56) Entgegenhaltungen:
- EP-A1- 2 361 749
- EP-A2- 0 686 497
- DE-A1-102006 031 841
- US-A- 4 735 855

## Beschreibung

Die vorliegende Erfindung betrifft eine zweiteilige, leicht zu öffnende Verpackung, deren Behälteröffnung mit einem Deckel aus einer vorzugsweisen transparenten Mehrschichtfolie versiegelt ist, die eine Schichtfolge aus
(a) einer ggf. mehrlagigen Siegelschicht (a), basierend auf wenigstens einem heißsiegelfähigen thermoplastischen Olefin-Homo- und/oder Copolymeren,
(b) einer ersten Haftvermittlerschicht (b), basierend auf wenigstens einem Olefin-Homo- und/oder Copolymeren, das zu 0,03 bis 0,5 Gew.-%, vorzugsweise zu 0,05 bis 0,3 Gew.-%, bezogen auf das Homo- und/oder Copolymere, mit polaren, organischen Gruppen modifiziert ist, und ggf. einem thermoplastischen Olefin-Homo-und/oder Copolymeren, vorzugsweise dem Olefin-Homo- und/oder Copolymeren der Schicht (a),
(c) einer Schicht (c) basierend auf wenigstens einem Homo- und/oder Copolyamid
(d) einer Barriereschicht (d),
(e) einer Schicht (e) basierend auf wenigstens einem Homo- und/oder Copolyamid
(f) gegebenenfalls einer zweiten Haftvermittlerschicht (f),
(g) gegebenenfalls einer ggf. mehrschichtigen Schicht (g) basierend auf wenigstens einem thermoplastischen Olefin-Homo- und/oder Copolymeren, und
(h) einer Trägerschicht (h) basierend auf wenigstens einem thermoplastischen Polymeren,
umfasst, wobei der Quotient aus der Siegelnahtfestigkeit zwischen dem Deckel und dem Behälter und aus der Verbundhaftung zwischen der Schicht b) und der Schicht c) 1,8 bis 4,5, vorzugsweise 1,9 bis 3 und die Gesamtdicke der Schicht (a) und der Schicht (b) höchstens 16 µm beträgt.

In der Lebensmittelindustrie werden Verpackungsgüter, wie Lebensmittel, vielfach in Kunststoffverpackungen aus einem Behälter und einem Deckel dargeboten, die es ermöglichen, dass der Käufer das Verpackungsgut in der Verpackung insbesondere durch den Deckel klar und sichtbar begutachten kann. Dabei ist es auch wünschenswert, dass die Verpackungen mit geringer und gleichmäßiger Krafteinwirkung kontrollierbar geöffnet werden können.

Aus dem Stande der Technik sind eine Vielzahl von Verpackungen aus Kunststoff bekannt, deren Deckel aus einer eine heißsiegelbare Schicht aufweisende Mehrschichtfolie besteht, die durch Heißsiegeln auf die Behälteröffnung aufgebracht wird. Zum Öffnen solcher Verpackungen wird üblicherweise die Heißsiegelnaht aufgerissen. Um das Öffnen zu erleichtern, kann das Siegelschichtmaterial der Deckelfolie so zusammengesetzt werden, dass der Deckel mit dem Behälter nur peelbar verbunden ist. Dabei ist es jedoch nachteilig, dass die Peelbarkeit des Siegelschichtmaterials oft zu einer unerwünschten Eintrübung des Deckels und zu einer verminderten Siegelfestigkeit zwischen den beiden Verpackungselementen führt.

In EP 1749655 B1 wurde versucht, dieses Problem durch Bereitstellung einer Mehrschichtfolie zu lösen, bei der nicht ein peelbares Siegelschichtmaterial eingesetzt, sondern die Kohäsion der an der Siegelschicht angrenzenden Schicht geschwächt wurde. Dies konnte dadurch erreicht werden, dass diese Schicht aus einem Polymer-Blend aus zwei unverträglichen Polymerkomponenten hergestellt wurde. Wenn eine so aufgebaute Mehrschichtfolie als Deckel gegen die Öffnung eines zweiten Verpackungselementes gesiegelt wird, so verbleiben im Bereich der Siegelnaht zumindest ein Stück der Siegelschicht und einer Teilschicht der angrenzenden Schicht beim Öffnen auf dem zweiten Verpackungselement, da sich die angrenzende Schicht in ihrer Längsrichtung durch Durchreißen (Kohäsionspeel) in zwei Teilschichten aufspaltet. Dies führt aber oft zu keiner sauberen Trennung zwischen Deckel und Behälter, da es beim Aufreißen auch zu einem Weiterreißen, bzw. Abreißen des Deckels außerhalb des Siegelnahtbereiches führen kann und ggf. Reste der Mehrschichtfolie auf dem verpackten Gut, wie einem verpackten Lebensmittel, verbleiben können, was für den Konsumenten unangenehm ist.

Es besteht daher ein Bedarf an Verpackungen, die sich nicht nur durch ein gleichmäßiges, kontrolliertes Öffnen, sondern auch durch ein sauberes, d. h. auf den Siegelnahtbereich begrenztes, aber trotzdem leichteres Aufreißen beim Öffnen auszeichnen.

Aufgabe der vorliegenden Erfindung war es daher, Verpackungen zur Verfügung zu stellen, die sich durch ein kontrolliertes, außerhalb des Siegelnahtbereiches weitgehend zerstörungsfreies und gleichmäßig leichtes Öffnen gegenüber den bekannten Verpackungen auszeichnen. Außerdem sollen sehr gute optische Eigenschaften wie Transparenz insbesondere des Deckels gegeben sein.

Diese Aufgabe wird durch die Bereitstellung der erfindungsgemäßen leicht zu öffnenden Verpackung gelöst, die dadurch gekennzeichnet ist, dass die Behälteröffnung mit einem Deckel aus einer vorzugsweisen transparenten Mehrschichtfolie versiegelt ist, die eine Schichtfolge aus
(a) einer ggf. mehrlagigen Siegelschicht (a), basierend auf wenigstens einem heißsiegelfähigen thermoplastischen Olefin-Homo- und/oder Copolymeren,
(b) einer ersten Haftvermittlerschicht (b), basierend auf wenigstens einem Olefin-Homo- und/oder Copolymeren, das zu 0,03 bis 0,5 Gew.-%, vorzugsweise zu 0,05 bis 0,3 Gew.-%, bezogen auf das Homo- und/oder Copolymere, mit polaren, organischen Gruppen modifiziert ist und ggf. einem thermoplastischen Olefin-Homo-und/oder Copolymeren, vorzugsweise den Olefin-Homo- und/oder Copolymeren der Schicht (a),
(c) einer Schicht (c) basierend auf wenigstens einem Homo- und/oder Copolyamid
(d) einer Barriereschicht (d),
(e) einer Schicht (e) basierend auf wenigstens einem Homo- und/oder Copolyamid
(f) gegebenenfalls einer zweiten Haftvermittlerschicht (f),
(g) gegebenenfalls einer ggf. mehrlagigen Schicht (g) basierend auf wenigstens einem thermoplastischen Olefin-Homo- und/oder Copolymeren, und
(h) einer Trägerschicht (h) basierend auf wenigstens einem thermoplastischen Polymeren,
umfasst, wobei der Quotient aus der Siegelnahtfestigkeit zwischen dem Deckel und dem Behälter und aus der Verbundhaftung zwischen der Schicht b) und der Schicht c) 1,8 bis 4,5, vorzugsweise 1,9 bis 3 und die Gesamtdicke aus der Schicht (a) und der Schicht (b) höchstens 16 µm beträgt.

Die erfindungsgemäß leicht zu öffnenden Verpackungen zeichnen sich insbesondere dadurch aus, dass beim Öffnen der Verpackung die mehrschichtige Deckelfolie im Siegelnahtbereich zwischen der Schicht (b) und (c) so delaminiert, dass der Teilschichtbund aus der versiegelten Schicht (a) und der Schicht (b) der mehrschichtigen Deckelfolie als entsprechend der Breite der Siegelnaht delaminiertes, herausgerissenes Teilstück dieses Teilschichtverbundes auf dem Behälter verbleibt.

Unter dem Begriff "delaminierbar" bzw. "Delaminierbarkeit" im Sinne der vorliegenden Erfindung ist zu verstehen, dass die Schichten, d. h. erfindungsgemäß die Schicht (b) mit der Schicht (c) der mehrschichtigen Deckelfolie, so miteinander verbunden sind, dass sie weitgehend zerstörungsfrei voneinander getrennt werden können. Unter dem Begriff "weitgehend zerstörungsfrei" im Sinne der vorliegenden Erfindung ist zu verstehen, dass beim Trennen der Schichten (b) und (c) winzige Reste als Spuren der einen Schicht auf der jeweiligen anderen Schicht verbleiben können, so dass der geöffnete Siegelnahtbereich zumindest andeutungsweise eine Weißfärbung zeigt.

Die Delaminierbarkeit zwischen den "delaminierbaren" Schichten wird durch die Verbundhaftung bestimmt. Die Methode zur Bestimmung der Verbundhaftung ist in der Beschreibung der vorliegenden Anmeldung nachstehend vor den Beispielen offenbart.

Die Bestimmung der Verbundhaftung wird auch dazu verwendet, um für die Haftvermittlerschicht (b) geeignete modifizierte Olefin-Homo- und/oder Copolymere auszuwählen, bzw. diese Polymerkomponente ggf. mit nicht modifizierten entsprechenden Polymeren so abzumischen, dass die Verbundhaftung zwischen der Schicht (b) und der Schicht (c) auf die im Verhältnis zur Siegelnahtfestigkeit notwendig geringere Verbundhaftung eingestellt wird.

Es versteht sich von selbst, dass auch die Verbundhaftung zwischen allen weiteren in der mehrschichtigen Deckelfolie vorhandenen Schichten höher sein muss als die Verbundhaftung zwischen der Schicht (b) und der Schicht (c), insbesondere aber die Verbundhaftung zwischen der Siegelschicht (a) und der Schicht (b) als Haftvermittlerschicht. In einer bevorzugten Ausführungsform der erfindungsgemäßen Verpackung beträgt die Siegelfestigkeit zwischen den beiden Verpackungselementen Behälter und Deckel 25 - 45 N/15mm, besonders bevorzugt 30 - 45 N/15mm.

Die Bestimmung der Siegelfestigkeit erfolgt gemäß der nachstehend beschriebenen Methode. Diese Methode kann auch dazu angewendet werden, um die Auswahl der Polymermaterialien für den Aufbau der Siegelschicht (a) und des Films des Behälters auf ausreichende Siegelfestigkeit zu überprüfen.

Die erfindungsgemäß zum Einsatz kommende Mehrschichtfolie ist vorzugsweise transparent, d. h. sämtliche Schichten der als Deckelfolie zum Einsatz kommenden Mehrschichtfolien sind transparent. Die Bestimmung der Transparenz, ggf. jeder einzelnen Schicht der erfindungsgemäß zum Einsatz kommenden Mehrschichtfolie erfolgt gemäß der nachstehend beschriebenen Methode. Ggf. kann die erfindungsgemäß zum Einsatz kommende Mehrschichtfolie zumindest teilweise bedruckt sein.

Zur Herstellung der ggf. mehrlagigen Siegelschicht (a) der erfindungsgemäß zum Einsatz kommenden Mehrschichtfolie eignen sich heißsiegelfähige, thermoplastische Olefin-Homo- und/oder Copolymere.

Zur Herstellung der ggf. mehrlagigen Siegelschicht (a) der erfindungsgemäß zum Einsatz kommenden Mehrschichtfolie eignen sich Olefin-Homo- und Copolymere vorzugsweise thermoplastische Olefin-Homo-oder Copolymere von Ethylen und/oder Propylen mit ggf. weiteren α,β-ungesättigten Olefinen mit 6-10, d.h. 6, 7, 8, 9 oder 10 Kohlenstoffatomen. Geeignete Olefin-Homopolymere sind vorzugsweise ausgewählt aus der Gruppe umfassend Ethylen-Homopolymere (Polyethylene, PE), vorzugsweise LDPE und HDPE, Propylen-Homopolymere (Polypropylene, PP) und Mischungen aus wenigstens zwei der genannten Polymere. Mit "LDPE" werden Polyethylene mit niedriger Dichte bezeichnet, die eine Dichte im Bereich von 0,86-0,93 g/cm³ aufweisen und sich durch einen hohen Verzweigungsgrad der Moleküle auszeichnen. Mit "HDPE" werden Polyethylene hoher Dichte bezeichnet, welche nur eine geringe Verzweigung der Molekülkette aufweisen, wobei die Dichte im Bereich zwischen 0,94 und 0,97 g/cm³ liegen kann. Geeignete Olefin-Copolymere sind vorzugsweise Copolymere von Ethylen und Propylen und Copolymere von Ethylen und/oder Propylen und wenigstens einem α-Olefin mit mindestens 6, vorzugsweise mit 6-10, besonders bevorzugt mit 6-8 Kohlenstoffatomen, ganz besonders bevorzugt Copolymere von Ethylen und/oder Propylen mit wenigstens einem α-Olefin ausgewählt aus der Gruppe umfassend Hexen und Octen, deren Anteil im Olefin-Copolymeren vorzugsweise höchstens 25 mol-%, besonders bevorzugt höchstens 15 mol-%, jeweils bezogen auf das Gesamtgewicht des Olefin-Copolymeren, beträgt. Geeignete Copolymere von Ethylen und wenigstens einem α-Olefin sind LLDPE und/oder mPE. Mit "LLDPE" werden lineare Ethylen-Copolymere niedriger Dichte bezeichnet, welche durch das Vorhandensein einer linearen Hauptkette mit daran befindlichen Seitenketten gekennzeichnet sind und eine Dichte im Bereich von 0,86 und 0,94 g/cm³ aufweisen. Mit "mPE" werden Ethylen-Copolymere bezeichnet, die mittels Metallocen-Katalysatoren polymerisiert wurden und vorzugsweise eine Dichte im Bereich von 0,88 und 0,93 g/cm³ aufweisen. Besonders geeignete Copolymere sind Copolymere von Propylen und Ethylen, wobei der Ethylenanteil bis zu 30 Gew.-% betragen kann.

Ganz besonders bevorzugt basiert die ggf. mehrlagige Schicht (a) der erfindungsgemäß zum Einsatz kommenden Mehrschichtfolie auf einem Polypropylen vorzugsweise mit statistischem Aufbau und/oder auf einem Propylen/EthylenCopolymeren.

Die Siegelschicht (a) kann ein- oder mehrlagig sein, wobei bei einer Mehrlagigkeit die Siegelschicht (a) vorzugsweise zweilagig ist, und wobei bei einer Mehrlagigkeit vorzugsweise dieselbe Art Homo- und/oder Copolymer, besonders bevorzugt dasselbe Homo- und/oder Copolymer eingesetzt wird.

Sofern die Siegelschicht (a) mehrlagig ist, weist vorzugsweise jede Lage dieselbe Dicke auf.

Vorzugsweise weist die erfindungsgemäß zum Einsatz kommende Mehrschichtfolie eine dauerhafte Antifog-Wirkung auf.

Unter dem Begriff "dauerhafte Antifog-Wirkung" wird im Sinne dieser Erfindung eine weitgehend gleichbleibend starke Antifog-Wirkung der erfindungsgemäß als Deckelfolie zum Einsatz kommende Mehrschichtfolie über einen Zeitraum von wenigstens sechs Monaten verstanden.

Zur Erzielung der Antifog-Wirkung enthält die ggf. mehrlagige Siegelschicht (a) der erfindungsgemäß zum Einsatz kommenden Mehrschichtfolie 1,0 Gew.-% bis 12,0 Gew.-%, bezogen auf das Gesamtgewicht der Siegelschicht (a), wenigstens eines Antifog-Additivs.

Besonders bevorzugt weist die Siegelschicht (a) 1,5 Gew.-% bis 10,0 Gew.-%, ganz besonders bevorzugt 3,0 Gew.-% bis 6,0 Gew.-%, wenigstens eines Antifog-Additivs, bezogen auf das Gesamtgewicht der ggf. mehrlagigen Siegelschicht (a), auf.

Vorzugsweise nimmt der Anteil des Antifog-Additivs in einer mehrlagigen Siegelschicht (a) von der äußersten Lage zu den innenliegenden Lagen kontinuierlich ab, besonders bevorzugt liegt das Antifog-Additiv nur in der äußersten Lage vor.

Als Antifog-Wirkung wird vorzugsweise wenigstens ein Additiv ausgewählt aus der Gruppe umfassend alkoxylierte und hydroxylierte Amine, alkoxylierte und hydroxylierte Amide, Polyol-Fettsäureester, vorzugsweise Glycerolfettsäureester, Ester, vorzugsweise Monoester, von Sorbitan und wenigstens einer Fettsäure, sowie jeweils deren entsprechende Salze, eingesetzt.

Geeignete alkoxylierte und hydroxylierte Amine sowie alkoxylierte und hydroxylierte Amide sind vorzugsweise ausgewählt aus der Gruppe umfassend N,N-Bis-(2-hydroxyethyl)-tetradecylamin, Bis-(2-hydroxyethyl)-pentadecylamin, Bis-(2-hydroxyethyl)-hexadecylamin, Bis-(2-hydroxyethyl)-heptadecylamin, Bis-(2-hydroxyethyl)-octadecylamin, Bis-(2-hydroxyethyl)-tetradecenylamin, Bis-(2-hydroxyethyl)-pentadecenylamin, Bis-(2-hydroxyethyl)-hexadecenylamin, Bis-(2-hydroxyethyl)-heptadecenylamin, Bis-(2-hydroxyethyl)-octadecenylamin, Caprylsäurediethanolamid, Caprinsäurediethanolamid, Laurinsäurediethanolamid, Myristinsäurediethanolamid, Palmitinsäurediethanolamid, Stearinsäurediethanolamid, Ölsäurediethanolamid, Linolsäurediethanolamid, Linolensäurediethanolamid und Arachidonsäurediethanolamid.

Unter einem "Polyol-Fettsäurester " wird im Sinne dieser Erfindung ein Ester eines mehrwertigen, d.h. z.B. eines zwei-, drei-, vier- oder fünfwertigen Alkohols verstanden, wobei wenigstens eine der Alkoholfunktionen eines solchen mehrwertigen Alkohols mit einer aliphatischen, verzweigten oder unverzweigten, gesättigten oder ungesättigten Fettsäure verestert ist. Sind mehrere Alkoholfunktionen des mehrwertigen Alkohols mit Fettsäuren verestert, so können diese Alkoholfunktionen jeweils unabhängig voneinander mit unterschiedlichen Fettsäuren verestert sein. Bevorzugte mehrwertige Alkohole sind Ethylenglycol, Glycerin (Glycerol) und 1,4-Butandiol. Besonders bevorzugt ist Glycerin. Glycerinfettsäureester umfassen somit Monoglyceride, Diglyceride und Triglyceride. Vorzugsweise sind die Fettsäuren ausgewählt aus der Gruppe umfassend Caprylsäure, Caprinsäure, Laurinsäure, Myristinsäure, Palmitinsäure, Stearinsäure, Ölsäure, Linolsäure, Linolensäure und Arachidonsäure. Bevorzugte Polyol-Fettsäureester sind ausgewählt aus der Gruppe umfassend Glycerinmonostearat, Glycerindistearat, Glycerinmonolaurat, Glycerindilaurat, Glycerinmonopalmitat, Glycerindipalmitat, Glycerinmonomyristat und Glycerindimyristat.

Geeignete Ester von Sorbitan sind Mono-, Di-, Tri- und Tetraester von Sorbitan, vorzugsweise Monoester von Sorbitan und wenigstens einer aliphatischen, verzweigten oder unverzweigten, gesättigten oder ungesättigten Fettsäure wie z.B. Caprylsäure, Caprinsäure, Laurinsäure, Myristinsäure, Palmitinsäure, Stearinsäure, Ölsäure, Linolsäure, Linolensäure und Arachidonsäure. Ein besonders bevorzugter Monoester von Sorbitan ist Sorbitanmonolaurat.

Vorzugsweise ist die Gesamtschichtdicke der ggf. mehrlagigen Siegelschicht (a) und der Schicht (b) höchstens 16 µm, vorzugsweise 5 bis 15 µm, wobei die Schichtdicke der Siegelschicht (a) vorzugsweise wenigstens 50 % der Gesamtdicke der Schicht (a) und der Schicht (b) beträgt.

Zur Herstellung der ersten Haftvermittlerschicht (b) der erfindungsgemäß zum Einsatz kommenden Mehrschichtfolie eignen sich wenigstens ein thermoplastisches Olefin-Homo- und/oder Copolymeres, das zu 0,03 - 0,5 Gew.-%, vorzugsweise zu 0,05 - 0,3 Gew.-% bezogen auf das Homo- und/oder Copolymere mit polaren, organischen Gruppen, vorzugsweise mit organischen Säuregruppen und/oder organischen Anhydridgruppen, besonders bevorzugt mit zyklischen organischen Anhydridgruppen, ganz besonders bevorzugt mit Maleinsäureanhydridgruppen modifiziert ist. Methoden zur Modifizierung dieser thermoplastischen Polymeren, die sich zur Herstellung der Haftvermittlerschicht (b) eignen, sind dem Fachmann bekannt. Vorzugsweise erfolgt die Modifizierung durch Pfropfung auf das thermoplastische Homo- oder Copolymere, besonders bevorzugt auf ein Olefin-Homo oder Copolymeres, das vorzugsweise überwiegend (zu mehr als 50 %) aus einem Olefin aufgebaut ist, aus dem auch das Polymere der Siegelschicht (a) überwiegend (zu mehr als 50 %) aufgebaut ist, besonders bevorzugt jeweils aus Propylen.

Ganz besonders bevorzugt wird zur Modifizierung der Haftvermittlerschicht (b) ein thermoplastisches Olefin-Homo oder Copolymere der gleichen Art eingesetzt, das auch als Polymeres der Siegelschicht (a) eingesetzt wird. Ganz besonders bevorzugt liegt ein mit zyklischen organischen Säureanhydridgruppen modifiziertes Ethylen- oder Propylen-Homo- oder Copolymeres, ganz besonders bevorzugt ein mit Maleinsäureanhydridgruppen in dem vorstehend genannten Ausmaß modifiziertes Propylen-Homo-Copolymeres oder Propylen/Ethylen-Copolymeres vor.

Vorzugsweise weist die Haftvermittlerschicht (b) der erfindungsgemäß zum Einsatz kommenden Mehrschichtfolie eine Schichtdicke von höchstens 8 µ, besonders bevorzugt von höchstens 5 µ, ganz besonders bevorzugt von höchstens 3 µ auf.

Sofern die Verbundhaftung, die nach der nachstehend aufgeführten Methode bestimmt wird, zwischen der ersten Haftvermittlerschicht (b) und der angrenzenden Polyamidschicht (c) zu gering ist, dass der Quotient aus der Siegelnahtfestigkeit und der Verbundhaftung zwischen der Schicht (b) und der Schicht (c) unter 1,8 liegt, so kann zur ausreichenden Erhöhung der Verbundhaftung zwischen diesen beiden Schichten nicht modifiziertes Olefin-Homo- oder Copolymeres zugemischt werden, das als Grundlage zur Modifizierung, vorzugsweise Pfropfung, gedient hat. Vorzugsweise ist das ein Polypropylen oder Propylencopolymeres, das auch zur Herstellung des gepfropften Polymeren der Haftvermittlerschicht (b) eingesetzt wurde. Durch einfache Vorversuche kann so die notwendige Verbundhaftung zwischen der Schicht (b) und der Schicht (c) eingestellt werden.

Zur Herstellung der Schicht (c) und der Schicht (e) der erfindungsgemäß zum Einsatz kommenden Mehrschichtfolie eignen sich Homo- und/oder Copolyamide, die vorzugsweise aus der Gruppe umfassend thermoplastische aliphatische, teilaromatische und aromatische Homo- oder Copolyamide ausgewählt sind. Diese Homo- oder Copolymamide können aus aliphatischen und/oder cycloaliphatischen Diaminen mit 2-10 Kohlenstoffatomen wie Hexamethylendiamin und/oder aromatischen Diaminen mit 6-10 Kohlenstoffatomen wie p-Phenylendiamin, und aus aliphatischen und/oder aromatischen Dicarbonsäuren mit 6-14 Kohlenstoffatomen wie z.B. Adipinsäure, Terephthalsäure oder Isoterephthalsäure aufgebaut sein. Weiterhin können diese Homo- oder Copolyamide aus Lactamen mit 4-10 Kohlenstoffatomen wie z.B. aus ε-Caprolactam hergestellt werden. Erfindungsgemäß zum Einsatz kommende Homo- und/oder Copolyamide sind vorzugsweise ausgewählt aus der Gruppe umfassend PA 6, PA 12, PA 66, PA 6I, PA 6T, entsprechende Copolymere und Mischungen aus wenigstens zwei der genannten Polymere.

Vorzugsweise ist die Dicke der Schicht (c) bzw. (e) identisch und beträgt 1,0 bis 6 µm, besonders bevorzugt 2 bis 4 µm.

Die erfindungsgemäß als Deckelfolie zum Einsatz kommende Mehrschichtfolie weist eine Schicht (d) als Barriereschicht, vorzugsweise als eine Gasbarriereschicht auf, welche jeweils mit der angrenzenden Schicht aus Polyamid verbunden ist. Besonders bevorzugt ist die Schicht (d) eine Sauerstoffbarriereschicht und/oder eine Wasserdampfbarriereschicht.

Vorzugsweise basiert die Schicht (d) der erfindungsgemäß zum Einsatz kommenden Mehrschichtfolie auf bzw. ist aufgebaut aus wenigstens einem thermoplastischen Polymeren ausgewählt aus der Gruppe umfassend Ethylen-Vinylalkohol-Copolymere (EVOH), zumindest teilverseifte Polyvinylacetate, Polyvinylidenchlorid (PVDC), Vinylidenchlorid-Copolymere, vorzugsweise mit einem Anteil an Vinylidenchlorid von wenigstens 80%, bezogen auf das Gesamtgewicht des Vinylidenchlorid-Copolymeren, oder einer Mischung aus wenigstens zwei der genannten Polymere. Besonders bevorzugt ist die Barriereschicht aus wenigstens einem Ethylen-Vinylalkohol-Copolymeren aufgebaut.

Die zur Herstellung der Schicht (d) eingesetzten Ethylen-Vinylalkohol-Copolymere (EVOH) werden durch vollständige oder unvollständige Hydrolyse von entsprechenden Ethylen-Vinylacetat-Copolymeren (EVAc) gewonnen. Vorzugsweise werden vollverseifte Ethylen-Vinylacetat-Copolymere mit einem Verseifungsgrad ≥ 98% und einem Ethylen-Anteil von 0,01-80 mol-%, vorzugsweise von 1-50 mol-%, jeweils bezogen auf das Gesamtgewicht des Ethylen-Vinylalkohol-Copolymeren, eingesetzt.

Die zur Herstellung der Schicht (d) der erfindungsgemäß zum Einsatz kommenden Mehrschichtfolie zumindest teilverseiften Polyvinylacetate werden durch vollständige oder unvollständige Hydrolyse von entsprechenden Polyvinylacetaten gewonnen. Besonders bevorzugt zur Herstellung der Schicht (c) eingesetzte zumindest teilverseifte Polyvinylacetate sind ausgewählt aus der Gruppe umfassend vollverseifte Polyvinylacetate (Polyvinylalkohole, PVOH) mit einem Verseifungsgrad > 98 % und teilverseifte Polyvinylacetate mit einem Verseifungsgrad von 75 bis einschließlich 98%.

Vorzugsweise weist die Schicht (d) der erfindungsgemäß zum Einsatz kommenden Mehrschichtfolie eine Schichtdicke von 1 µm bis 10 µm, besonders bevorzugt von 1,5 bis 5 µm auf.

Die Schicht (e) aus Polyamid ist ggf. über eine Haftvermittlerschicht (f) mit der an sie angrenzenden ggf. vorhandenen Schicht (g) oder der Trägerschicht (h), verbunden.

Vorzugsweise basiert die zweite Haftvermittlerschicht (f) auf wenigstens einem modifizierten thermoplastischen Olefin-Homo- und/oder Copolymeren. Dabei kann dasselbe modifizierte thermoplastischen Olefin-Homo- und Copolymeren eingesetzt werden, die auch zur Herstellung der Schicht (b) eingesetzt wird. Besonders bevorzugt basiert auch die Haftvermittlerschicht (f) auf wenigstens einem mit cyclischen, organischen Säureanhydrid-Gruppen modifizierten Ethylen- oder Propylen- Homo- oder Copolymeren, besonders bevorzugt auf einem mit Maleinsäureanhydrid-Gruppen modifizierten Ethylen- oder Propylen- Homo- oder Copolymeren.

Vorzugsweise weist die Haftvermittlerschicht (f) der erfindungsgemäß zum Einsatz kommenden Mehrschichtfolie eine Schichtdicke von höchstens 8 µm, besonders bevorzugt höchstens 5 µm, ganz besonders bevorzugt von höchstens 3 µm auf.

In einer weiteren bevorzugten Ausführungsform weist die erfindungsgemäß zum Einsatz kommende Mehrschichtfolie aus produktionstechnischen Gründen auch eine ggf. mehrlagige, vorzugsweise zweilagige Schicht (g) basierend auf wenigstens einem thermoplastischen Olefin-Homo- oder Copolymeren auf.

Zur Herstellung der Schicht (g) der erfindungsgemäß zum Einsatz kommenden Mehrschichtfolie eignet sich dieselbe Art von thermoplastischen Olefin-Homo- und Copolymeren, welche auch zur Herstellung der Siegelschicht (a) eingesetzt werden können. Bevorzugt ist ein thermoplastisches Olefin-Copolymer, vorzugsweise ein Propylen/Ethylen-Copolymer.

Vorzugsweise bestehen die Lagen einer mehrlagigen Schicht (g) aus derselben Art Homo- und/oder Copolymer, besonders bevorzugt aus denselben Homo- und/oder Copolymeren.

Vorzugsweise weist die Schicht (g) der erfindungsgemäß zum Einsatz kommenden Mehrschichtfolie eine Schichtdicke von höchstens 25 µm, besonders bevorzugt höchstens 20 µm, ganz besonders bevorzugt von höchstens 15 µm auf.

Bei einer Mehrlagigkeit der Schicht (g) weist vorzugsweise jede Lage dieselbe Dicke auf.

Die erfindungsgemäß zum Einsatz kommende Mehrschichtfolie weist ferner eine transparente, gegebenenfalls zumindest teilweise bedruckte Trägerschicht (h) auf.

Zur Herstellung der Trägerschicht (h) der erfindungsgemäß zum Einsatz kommenden Mehrschichtfolie eignet sich vorzugsweise wenigstens ein thermoplastisches Polymer.

Vorzugsweise basiert die Trägerschicht (h) der erfindungsgemäß zum Einsatz kommenden Mehrschichtfolie auf wenigstens einem thermoplastischen Polymeren ausgewählt aus der Gruppe umfassend Olefin-Homo oder Copolymere, Homo- oder Copolyamide und Homo- oder Copolyester. Besonders bevorzugt basiert die Trägerschicht (h) auf wenigstens einem Homo- und/oder Copolyamid.

Zur Herstellung der Trägerschicht (h) kann dieselbe Art von Olefin-Homo oder Copolymeren eingesetzt werden, welche auch zur Herstellung der Siegelschicht (a) der erfindungsgemäß zum Einsatz kommenden Mehrschichtfolie eingesetzt werden können.

Zur Herstellung der Trägerschicht (h) kann dieselbe Art von Homo- und Copolyamiden eingesetzt werden, welche auch zur Herstellung der Schichten (c) und (e) der erfindungsgemäß zum Einsatz kommenden Mehrschichtfolie eingesetzt werden können.

Zur Herstellung der Trägerschicht (h) der erfindungsgemäß zum Einsatz kommenden Mehrschichtfolie geeignete Homo- und/oder Copolyester sind vorzugsweise ausgewählt aus der Gruppe umfassend amorphe, thermoplastische aliphatische, teilaromatische und aromatische Homo- und Copolyester. Solche Homo- und Copolyester leiten sich von Polyolen, vorzugsweise von Diolen, wie z.B. Ethylenglycol oder 1,4-Butandiol und Dicarbonsäuren oder Dicarbonsäure-Derivaten wie Adipinsäure, Isoterephthalsäure und/oder Terephthalsäure ab. Erfindungsgemäß können zur Herstellung der Trägerschicht (j) als Homo- und/oder Copolyester auch Polycarbonate (PC) verwendet werden. Als Homopolyester werden solche Polyester bezeichnet, die sich von einer Polyol-Komponente und einer Dicarbonsäure-Komponente ableiten. Geeignete Homopolyester sind vorzugsweise ausgewählt aus der Gruppe umfassend PET, PBA, und PBT. Mit "PET" wird Polyethylenterephthalat bezeichnet, welches aus Ethylenglykol und Terephthalsäure hergestellt wird. Mit "PBA" wird Polybutylenadipat bezeichnet, welches aus Butan-1,4-diol und Adipinsäure hergestellt wird. Mit "PBT" wird Polybutylenterephthalat bezeichnet, welches aus Butan-1,4-diol und Terephthalsäure hergestellt wird. Der vorzugsweise amorphe Zustand wird dabei durch das Präfix "A" gekennzeichnet. Ein besonders bevorzugter amorpher Homopolyester ist APET (amorphes PET). Als Copolyester werden solche Polyester bezeichnet, die neben einer Polyol-Komponente und einer Dicarbonsäure-Komponente noch wenigstens ein weiteres Co-Monomer, vorzugsweise eine weitere Polyol-Komponente, enthalten. Geeignete vorzugsweise amorphe Copolyester sind Copolyester aus einer aromatischen Dicarbonsäure wie Terephthalsäure, einem aliphatischen Glykol wie Ethylenglykol und wenigstens einem weiteren Monomer, vorzugsweise wenigstens einem weiteren Monomer ausgewählt aus der Gruppe umfassend verzweigte, aliphatische Polyole, aromatische Polyole und cycloaliphatische Polyole. Ein besonders bevorzugter amorpher Copolyester leitet sich von Ethylenglykol, Terephthalsäure und 1,4-Cyclohexandimethanol ab.

Die Trägerschicht (h) der erfindungsgemäß zum Einsatz kommenden Mehrschichtfolie kann geprägt und/oder orientiert, vorzugsweise monoaxial oder biaxial orientiert, besonders bevorzugt biaxial orientiert sein.

Die Trägerschicht (h) der erfindungsgemäß zum Einsatz kommenden Mehrschichtfolie weist vorzugsweise eine Schichtdicke von 10 µm bis 100 µm, besonders bevorzugt von 12 µm bis 80 µm auf.

Vorzugsweise kann die Trägerschicht (h) mit dem übrigen Schichtverbund der erfindungsgemäß zum Einsatz kommenden Mehrschichtfolie, vorzugsweise mit der ggf. vorhandenen Schicht (g) oder (f) oder der Schicht (e) dieser Mehrschichtfolie, über eine Klebstoffschicht aus wenigstens einem Kaschierklebstoff, vorzugsweise einem Kaschierklebstoff basierend auf Polyurethan, besonders bevorzugt aus einem Zwei-Komponenten-Polyurethanklebstoff, verbunden sein.

Vorzugsweise weist die Klebstoffschicht der erfindungsgemäß zum Einsatz kommenden Mehrschichtfolie eine Schichtdicke von höchstens 10 µm, besonders bevorzugt höchstens 5 µm, ganz besonders bevorzugt von höchstens 3 µm auf.

Die erfindungsgemäß zum Einsatz kommende Mehrschichtfolie weist vorzugsweise eine Gesamtschichtdicke von 35 µm bis 200 µm, besonders bevorzugt von 40 µm bis 150 µm, ganz besonders bevorzugt von 45 µm bis 120 µm, insbesondere von 50 µm bis 100 µm, insbesondere bevorzugt von 45 µm bis 80 µm auf.

Jede der Schichten der erfindungsgemäßen Mehrschichtfolie, vorzugsweise die Siegelschicht (a), kann, falls erforderlich wenigstens ein dem Fachmann bekanntes übliches Additiv enthalten, vorzugsweise wenigstens ein Additiv ausgewählt aus der Gruppe umfassend Antiblockmittel, Farbstoffe, Antioxidantien und/oder Antistatika. Dabei kann jede der Schichten jeweils unabhängig voneinander wenigstens 0,01-20 Gew.-%, vorzugsweise wenigstens 0,1-10 Gew.-%, jeweils bezogen auf das Gesamtgewicht einer einzelnen Schicht, wenigstens eines der vorstehend genannten Additive enthalten.

Vorzugsweise können die Schichten (a), (b), (c), (d) und (e) sowie die ggf. vorhandenen Schichten (f) und (g) der erfindungsgemäß zum Einsatz kommenden Mehrschichtfolie teilweise oder insgesamt in Form einer Schlauchfolie oder einer Cast-Folie produziert und verarbeitet werden.

Demzufolge kann die Herstellung der einzelnen Schichten (a), (b), (c), (d) und (e) sowie den ggf. vorhandenen Schichten (f) und (g) der erfindungsgemäß zum Einsatz kommenden Mehrschichtfolie durch (Co)-Extrusion, besonders bevorzugt durch Blasfolien-(Co)-Extrusion oder durch Cast-(Co)-Extrusion erfolgen.

Die vorhandene Trägerschicht (h) der erfindungsgemäß zum Einsatz kommenden Mehrschichtfolie ist vorzugsweise durch Extrusion erhältlich und kann mit dem übrigen Schichtverbund der Mehrschichtfolie, vorzugsweise mit der Schicht (f) oder (g), über eine Klebstoffstoffschicht verbunden werden.

Nach der (Co)-Extrusion können einzelne Schichten oder Schichtverbunde oder die Mehrschichtfolie insgesamt gegebenenfalls gereckt, d.h. orientiert werden.

Sofern vorzugsweise die Siegelschicht (a) mit wenigstens einem Antifog-Additiv ausgerüstet wird, so kann dies vorzugsweise bei der Herstellung der Schicht (a) durchgeführt werden. Dabei ist zu beachten, dass die Dotierung der Siegelschicht (a) mit dem Antifog-Additiv durch Abmischen des Antifog-Additivs oder durch Abmischen mit einem Masterbatch aus dem eingesetzten Antifog-Additiv in dem oder den Polymeren der Siegelschicht (a), mit dem verbleibenden Anteil des oder der Polymeren der Siegelschicht (a) erfolgen kann. Dieses Abmischen kann in Granulat/Pulver- oder Granulat/Granulat-Form trocken erfolgen. Es ist aber auch möglich, das Antifog-Additiv dem oder den aufgeschmolzenen Polymer(en) für die Siegelschicht (a) zuzugeben, vorzugsweise durch Zudosierung in einem für die Extrusion der Siegelschicht (a) verwendeten Extruder. Enthält ggf. wenigstens eine weitere Schicht der erfindungsgemäß zum Einsatz kommenden Mehrschichtfolie wenigstens ein weiteres der vorstehend genannten Additive, so erfolgt die Dotierung mit diesem Additiv analog.

Die erfindungsgemäß zum Einsatz kommende Mehrschichtfolie eignet sich zur Herstellung von Verpackungselementen, vorzugsweise von Deckel und Verpackungen jeglicher Art.

Ein Gegenstand der vorliegenden Erfindung ist eine leicht zu öffnende, zweiteilige Verpackung, die einen Deckel aus einer vorstehend beschriebenen Mehrschichtfolie als ein erstes Verpackungselement aufweist. Vorzugsweise weist eine solche zweiteilige, leicht zu öffnende Verpackung einen Behälter als zweites Verpackungselement auf.

Der Behälter als zweites Verpackungselement einer erfindungsgemäßen Verpackung ist vorzugsweise eine Mulde oder eine Schale geformt aus einem ein- oder mehrschichtigen, vorzugsweise einschichtigen Film aus einem thermoplastischen Polymeren, der gegebenenfalls eine ggf. mehrlagige Siegelschicht (s) aufgebaut aus einem heißsiegelfähigen, thermoplastischen Polymeren aufweist. Sowohl der ein-oder mehrschichtige Film als auch die ggf. mehrlagige Siegelschicht (s) sind vorzugsweise transparent.

Zur Herstellung des Behälters, zumindest aber der Siegelschicht (s) des erfindungsgemäß zum Einsatz kommenden Behälters, eignen sich dieselben, heißsiegelfähigen thermoplastischen Olefin- Homo und/oder Copolymere, die zur Herstellung der Siegelschicht (a) der Deckelfolie eingesetzt werden können. Vorzugsweise basiert die Siegelschicht (s) des erfindungsgemäß zum Einsatz kommenden Behälters auf dem- oder denselben Polymeren wie die Siegelschicht (a) der Deckelfolie. Vorzugsweise gilt dies auch bei einer Mehrlagigkeit der Siegelschicht (s).

Vorzugsweise weist die Siegelschicht (s) des erfindungsgemäß zum Einsatz kommenden Behälters eine Schichtdicke von ≤ 20 µm, besonders bevorzugt von 1 bis 12 µm, ganz besonders bevorzugt von 2 bis 11 µm auf, wobei bei einer Mehrlagigkeit der Siegelschicht (s) vorzugsweise jede Lage dieselbe Dicke aufweist.

Der Behälter einer solchen leicht zu öffnenden, zweiteiligen Verpackung ist vorzugsweise durch Thermoverformung, besonders bevorzugt durch Tiefziehen, aus einem Film geformt worden. Vorzugsweise weist der erfindungsgemäß zum Einsatz kommende Behälter einen umlaufenden Rand auf, der die Größe der Öffnung des Behälters definiert, die mit dem Deckel versiegelt wird.

Vorzugsweise weist die erfindungsgemäße, leicht zu öffnende Verpackung als zweites Verpackungselement einen Behälter geformt aus einem vorzugsweise einschichtigen Film aus wenigstens einem thermoplastischen Polymeren ausgewählt aus der Gruppe bestehend aus Homo- und Copolyester, Homo- und Copolyamide und Olefin-Homo- und Copolymere auf, wobei der Film ggf. eine ggf. mehrlagige Siegelschicht (s) basierend auf einem heißsiegelfähigen thermoplastischen Polymeren aufweist.

Dabei können zur Herstellung des vorzugsweise einschichtigen Films des erfindungsgemäß zum Einsatz kommenden Behälters dieselben thermoplastischen Homo- und/oder Copolyester, Homo- und/oder Copolyamide und/oder Olefin-Homo- und/oder Copolymere eingetzt werden, die sich auch zur Herstellung der Trägerschicht (h) eignen.

Vorzugsweise weist der vorzugsweise einschichtige Film des erfindungsgemäß zum Einsatz kommenden Behälters eine Schichtdicke von 100 bis 1200 µm, besonders bevorzugt von 200 bis 1000 µm, auf.

Zur Herstellung der erfindungsgemäßen, leicht zu öffnenden Verpackung wird die erfindungsgemäß zum Einsatz kommende, mehrschichtige Deckelfolie über die Öffnung des erfindungsgemäß zum Einsatz kommenden Behälters, vorzugsweise auf den umlaufenden Rand dieses Behälters, in Form einer Siegelnaht gesiegelt.

Die jeweiligen Herstellungsverfahren und entsprechende übliche Verfahrensparameter sind dem Fachmann allgemein bekannt.

Die Siegelung der erfindungsgemäß zum Einsatz kommenden Mehrschichtfolie als Deckel zum Verschließen der Öffnung des erfindungsgemäß zum Einsatz kommenden Behälters erfolgt vorzugsweise für höchstens 2 Sekunden, besonders bevorzugt für höchstens ≤ 1,5 Sekunden, vorzugsweise bei einer Temperatur im Bereich von 150 bis 220 °C, besonders bevorzugt im Bereich von 180 bis 200 °C, und vorzugsweise bei einem Druck von ≥ 1,5 bar bis ≤ 6 bar, besonders bevorzugt von ≥ 2 bar bis ≤ 5,5 bar.

Die Siegelnahtfestigkeit zwischen den beiden Verpackungselementen, dem Behälter und dem Deckel aus der erfindungsgemäß zum Einsatz kommenden Mehrschichtfolie, beträgt vorzugsweise höchstens 45 N/15 mm, besonders bevorzugt 30 bis 45 N/15 mm.

Die Bestimmung der Siegelfestigkeit, die der Siegelnahtfestigkeit entspricht, erfolgt gemäß der nachstehend beschriebenen Methode. Diese Methode kann auch dazu angewendet werden, um die Auswahl der Polymermaterialien für den Aufbau der Siegelschicht (a) auf ausreichende Siegelfestigkeit zu überprüfen.

Die erfindungsgemäßen Verpackungen zeichnen sich dadurch aus, dass sie kontrollierbar, leicht und exakt, d. h. im wesentlichen ohne Zerstörung der Schicht (b) zu öffnen sind und dabei ein gleichmäßiges und in einem Zug ohne Erhöhung der Krafteinwirkung ausführbares Öffnen ermöglichen.

Für das Öffnen der erfindungsgemäßen Verpackungen ist es nicht unbedingt notwendig, den Deckel mit einer Öffnungshilfe zu versehen. Wenn dennoch eine Öffnungshilfe, vorzugsweise eine Lasche angebracht ist, so grenzt diese vorzugsweise an den Siegeinahtbereich der Verpackung an. Das Öffnen der Verpackung bis zum Siegelnahtbereich erfolgt durch Anheben des Deckels bis hin zu diesem Bereich, oder, falls eine Öffnungshilfe angebracht ist, unter Benutzung dieser Öffnungshilfe. Beim Öffnungsvorgang kommt es im Siegelnahtbereich zu einer im wesentlichen zerstörungsfreien Delaminierung des Teilschichtverbundes der Siegelschicht (a) und der Schicht (b) von der Schicht (c) derart, dass dieser delaminierte Teilschichtverbund im Siegelnahtbereich entsprechend der Siegelnahtbreite weitgehend exakt aus der Schicht (a) und (b) ausreißt und als herausgerissenes Teilstück auf dem Behälter verbleibt. Nach diesem Öffnen im Bereich der Siegelnaht kann der Deckel der Verpackung vom Behälter weiter leicht abgehoben bzw. abgezogen werden.

Die erfindungsgemäße, leicht zu öffnende Verpackung, vorzugsweise die Deckelfolie der Verpackung, besonders bevorzugt die Trägerschicht (h) der erfindungsgemäß zum Einsatz kommenden mehrschichtigen Deckelfolie kann zumindest teilweise bedruckt und/oder eingefärbt transparent sein.

Die erfindungsgemäße, leicht zu öffnende Verpackung eignet sich vorzugsweise als Verpackung für Nahrungsmittel, besonders bevorzugt für Lebensmittel. Vorzugsweise liegt daher ein Lebensmittel als Verpackungsgut in der leicht zu öffnenden Verpackung verpackt vor und kann vorzugsweise durch die erfindungsgemäß zum Einsatz kommende transparente Deckelfolie problemlos betrachtet werden.

Ein weiterer Gegenstand der vorliegenden Erfindung ist eine erfindungsgemäße, leicht zu öffnende Verpackung für Lebensmittel, besonders bevorzugt eine Verpackung für verderbliche Lebensmittel, vorzugsweise für Frischfleisch.

### Bestimmung der Verbundhaftung

Die Verbundhaftung wird durch die Trennkraft in [N/15 mm] angegeben, die zum Trennen des Teilschichtverbundes aus der Siegelschicht (a) und aus der Schicht (b) von der Schicht (c) der erfindungsgemäßen Mehrschichtfolie bzw. entsprechender Schichten geeigneter mehrschichtiger Vergleichsfolien erforderlich ist. Die Trennung des Teilschichtverbundes aus Siegelschicht (a) und aus Schicht (b) von der Schicht (c) erfolgt dabei weitgehend zerstörungsfrei unter Delaminierung der beiden Schichten von der Schicht (c).

Zur Bestimmung der Verbundhaftung zwischen der Schicht (b) und der Schicht (c) werden ein Teststreifen einer erfindungsgemäßen Mehrschichtfolie und ein Teststreifen aus einer zweiten einschichtigen Folie aus einem thermoplastischen Polymeren, das jeweils zur Herstellung des erfindungsgemäß eingesetzten Behälters eingesetzt wird, welche jeweils eine Breite von 15 mm und eine Länge von ca. 150 mm aufweisen, parallel übereinander gelegt, wobei der Teststreifen der erfindungsgemäßen Mehrschichtfolie mit seiner Siegelseite, d.h. der Siegelschicht (a) auf eine der Seiten der zweiten einschichtigen Folien gelegt wird. Mit einem Siegelgerät werden die beiden Streifen entlang der gesamten Breite von 15 mm miteinander versiegelt. Der resultierende gesiegelte Teststreifen wird im Anschluss in einer Zugprüfungsmaschine so befestigt, dass die voneinander zu trennenden Schichten (Schicht (b) von Schicht (c)) einen Winkel von ca. 180 °C bilden und werden anschließend voneinander getrennt. Über die Messtrecke wird die maximale und mittlere Kraft zur Trennung bestimmt. Als Meßgerät für die Prüfung wird eine rechnergesteuerte Zugprüfungsmaschine verwendet. Zur Ermittlung der Verbundhaftung wird dabei ein Kraft-Wegdiagramm aufgezeichnet. Die in N gemessene Kraft entspricht der Kraft, die benötigt wird, um die voneinander zu trennenden Schichten (Schicht (b) von Schicht (c)) des Teststreifens bis zur vollständigen Trennung zu trennen.

Die Methode wird auch angewendet, um ggf. die Auswahl der Polymermaterialien für den Aufbau der Schicht (b) auf ausreichende Delaminierung von der Schicht (c) zu überprüfen. Die Verbundhaftung zwischen diesen beiden Schichten kann damit auch ohne vorherige Siegelung gegen eine(n) ein-oder mehrschichtigen Film oder Folie, die als Behälter dient, bestimmt werden.

### Bestimmung der Siegelfestigkeit

Die als Deckelfolie erfindungsgemäß zum Einsatz kommende Mehrschichtfolie eignet sich als Deckel einer erfindungsgemäßen zweiteiligen Verpackung, die als zweites Verpackungselement einen Behälter aufweist. Zur Herstellung einer solchen Verpackung kann die Deckelfolie über die Siegelschicht (a) auf den ggf. eine Siegelschicht (s) aufweisenden Behälter gesiegelt werden.

Die Siegelfestigkeit wird durch die Trennkraft in [N/15 mm] angegeben, die erforderlich ist, um den Behälter und den Deckel einer solchen Verpackung voneinander zu trennen.

Die Siegelfestigkeit zwischen dem Behälter und dem Deckel beruht auf der Siegelfestigkeit zwischen der Siegelschicht (a) der erfindungsgemäß zum Einsatz kommenden Mehrschichtfolie und Behälter, d.h. dem Film, aus dem der Behälter hergestellt wird. Es ist daher ausreichend, die Siegelfestigkeit zwischen einer Monofolie bestehend aus einer Siegelschicht (a) und dem Behälterfilm zu bestimmen. Die Methode zur Bestimmung der Siegelfestigkeit kann auch dazu angewendet werden, um die Auswahl der Polymermaterialien für den Aufbau der Siegelschicht (a) und des Behälter-Films auf ausreichende Siegelfestigkeit zu überprüfen.

Die Bestimmung der Siegelfestigkeit erfolgt wie unter "Bestimmung der Verbundhaftung" beschrieben: Ein Teststreifen einer ersten Folie aus der Siegelschicht (a) und ein Teststreifen aus einer zweiten Folie, welche jeweils eine Breite von 15 mm und eine Länge von ca. 150 mm aufweisen, parallel übereinander gelegt. Mit einem Siegelgerät werden die beiden Streifen entlang der gesamten Breite von 15 mm miteinander versiegelt. Die beiden mit einer Siegelnaht versehenen Teststreifen werden an ihrem längeren, nicht versiegelten Enden in einer Zugprüfungsmaschine so befestigt, dass die voneinander zu trennenden Streifen einen Winkel von ca. 180 °C bilden und voneinander getrennt. Die anderen nicht versiegelten Enden werden dabei nicht in einem bestimmten Winkel fixiert. Die Messtrecke bzw. Messdauer ist so lange, bis die Siegelnaht von 15 mm aufgeht. Über der Messtrecke des Siegelbereichs wird die maximale und mittlere Kraft zur Trennung bestimmt. Als Meßgerät für die Prüfung wird eine rechnergesteuerte Zugprüfungsmaschine verwendet. Die in N gemessene Kraft entspricht der Kraft, die benötigt wird, die voneinander zu trennenden beiden Teststreifen entlang der Siegelnaht von 15 mm zu trennen.

Die nachfolgenden Beispiele und Vergleichsbeispiele dienen der Erläuterung der Erfindung, sind jedoch nicht einschränkend auszulegen.

### I. Chemische Charakterisierung der eingesetzten Rohstoffe:

| | |
|---|---|
| PP-Copolymer: | Propylen/Ethylen-Copolymer mit 4,2 Gew.% Ethylen (Schmelzpunkt: 145°C, Dichte: 0,905 g/cm³) |
| EVOH-Copolymer: | Ethylen-Vinylalkohol-Copolymer (Ethylen-Anteil: 38 mol-%) |
| HV1: | PP-Copolymere modifiziert mit Maleinsäureanhydrid |
| PA-6: | Polyamid 6 |
| PUR: | Klebstoff basierend auf Polyurethan |
| PA-6 (BO): | Biaxial orientiertes Polyamid 6 |

### II. Herstellung der erfindungsgemäß als Deckelfolie zum Einsatz kommenden Mehrschichtfolie B1 bzw. einer Mehrschichtfolie V1 zum Vergleich.

Es wurden die Mehrschichtfolie **B1** und V1 wie folgt hergestellt:

Die Mehrschichtfolie **B1** bzw. V1 wurde zunächst jeweils als 7-schichtige Folie (Schichten (a), (b), (c), (d), (e), (f), (g)) durch Blasfolien-Co-Extrusion hergestellt. Die einzelnen vorstehend genannten Schichten der so erhaltenen Folien grenzen dabei jeweils in der Reihenfolge unmittelbar aneinander an, in der sie nachstehend in der Tabelle 1 aufgeführt sind. Die Schicht (g) der so erhaltenen Folienverbunde wurde anschließend mit einer Trägerschicht (h) mittels eines auf Polyurethan-basierenden Klebstoffs kaschiert, so dass eine einschließlich der resultierenden Klebstoffschicht 9-schichtige **(B1)** Mehrschichtfolie B1 bzw. V1 erhalten wurde. Die Mehrschichtfolie **B1** bzw. V1 weist jeweils den Schichtaufbau gemäß der nachstehenden *Tabelle 1* und eine Gesamtschichtdicke von 55 µm bzw. 58,3 µm auf. Alle %-Angaben in *Tabelle 1* sind jeweils Gew.-%.

**Tabelle 1- Mehrschichtfolie B1 bzw. V1**

| Schichtaufbau **(B1 und V1)** | Rohstoffe | Schichtfolie B1 [µm] | Schichtdicke V1 [µm] |
|---|---|---|---|
| Siegelschicht (a) aus zwei gleich dicken Lagen | PP-Copolymer | 10 (5/5) | 15 (7,5/7,5) |
| Haftvermittlerschicht (b) | HV-1 | 2,8 | 2,8 |
| Schicht (c) | PA-6 | 3 | 3 |
| Barriereschicht (d) | EVOH | 3,5 | 3,5 |
| Schicht (e) | PA-6 | 3 | 3 |
| Haftvermittlerschicht(f) | HV-1 | 2 | 2 |
| Schicht (g) aus zwei gleich dicken Lagen | PP-Copolymer | 12 (6/6) | 12 (6/6) |
| Klebstoffschicht (i) | PUR | 2 | 2 |
| Trägerschicht (h) | PA-6 (BO) | 15 | 15 |

### III Bestimmung der Verbundhaftung bzw der Siegel(naht)fertigkeit

Die Mehrschichtfolie B1 bzw. V1 wurde bei einer Temperatur von 180°C (Siegelzeit: 0,5s; Siegeldruck: 5 bar; Breite des Folienstreifens: 15 mm) gegen ein 500 µm dickes Cast-PP gesiegelt und anschließend die Kraft zum Abziehen der Folie gemäß DIN 55529 ermittelt.

Zur Bestimmung der Verbundhaftung zwischen der Schicht (b) und (c) wird die Mehrschichtfolie B1, wie oben beschrieben, gegen 500 µm PP gesiegelt. Beim Abziehen der Folie trennt die Folie zwischen der Schicht (b) und (c) (Schichtverbund (a) und (b) verbleiben auf der 500 µm PP-Folie) und die dabei auftretende Kraft wird gemessen.

Zur Bestimmung der Verbundhaftung zwischen der Schicht (b) und (c) wird die Mehrschichtfolie V1 ebenfalls wie vorstehend beschrieben gegen 500 µm gesiegelt. Beim Abziehen der Folie reißt die Folie aber ab.

Zur Bestimmung der Siegel(naht)festigkeit der Schicht (a) auf dem PP wird eine entsprechende Folie ohne die Schichten (c) bis (g) gefertigt. Diese Folie wird wie vorstehend beschrieben gegen 500 µm PP gesiegelt und abgezogen. Die dabei gemessene Kraft entspricht der Siegelnahtfestigkeit der Schicht (a) auf der PP-Folie. Der gemessene Wert lag für das Beispiel B1 bzw. für das Vergleichsbeispiel V1 bei 31 bzw. bei 32 N/15 mm.

Die Prüfergebnisse sind der *Tabelle 2* zu entnehmen.

**Tabelle 2**

| **Prüfergebnisse:** | | | | |
|---|---|---|---|---|
| Beispiel | Verbundhaftung zwischen der Schicht (b) und (c) | Siegelnahtfestigkeit | Quotient aus der Siegelnahtfestigkeit und der Verbundhaftung zwischen der Schicht (b) und (c) | |
| B1 | 15 N/15 mm | 31 N/15 mm | 2,1 | 1) |
| V1 | --- | 32 N/15 mm | - | 2) |

| | | | | |
|---|---|---|---|---|
| 1) Die Mehrschichtfolie delaminiert im Siegelnahtbereich, wodurch ein Teilverbund aus Siegelschicht (a) und Schicht (b) entsprechend der Breite der Siegelnaht als Teilstück aus dem Teilverbund ausreißt und auf der PP-Schale verbleibt. 2) Die Mehrschichtfolie reiß beim Abziehen ab, so dass der Quotient aus Siegelnahtfestigkeit und Verbundhaftung nicht zu ermitteln ist. | | | | |

## Patentansprüche

1. Eine leicht zu öffnende, zweiteilige Verpackung, deren Behälteröffnung mit einem Deckel aus einer vorzugsweise transparenten Mehrschichtfolie versiegelt ist, die eine Schichtfolge aus
(a) einer ggf. mehrlagigen Siegelschicht (a), basierend auf wenigstens einem heißsiegelfähigen thermoplastischen Olefin-Homo- und/oder Copolymeren,
(b) einer ersten Haftvermittlerschicht (b), basierend auf wenigstens einem Olefin-Homo- und/oder Copolymeren, das zu 0,03 bis 0,5 Gew.-%, vorzugsweise zu 0,05 bis 0,3 Gew.-%, bezogen auf das Homo- und/oder Copolymere, mit polaren, organischen Gruppen modifiziert ist, und ggf. einem thermoplastischen Olefin-Homo-undloder Copolymeren, vorzugsweise den Olefin-Homo- und/oder Copolymeren der Schicht (a),
(c) einer Schicht (c) basierend auf wenigstens einem Homo- und/oder Copolyamid
(d) einer Barriereschicht (d),
(e) einer Schicht (e) basierend auf wenigstens einem Homo- und/oder Copolyamid
(f) gegebenenfalls einer zweiten Haftvermittierschicht (f),
(g) gegebenenfalls einer Schicht (g) basierend auf wenigstens einem thermoplastischen Olefin-Homo- und/oder Copolymeren, und
(h) einer Trägerschicht (h) basierend auf wenigstens einem thermoplastischen Polymeren,
umfasst,
wobei der Quotient aus der Siegelnahtfestigkeit zwischen dem Deckel und dem Behälter und aus der Verbundhaftung zwischen der Schicht b) und der Schicht c) 1,8 bis 4,5, vorzugsweise 1,9 bis 3 und die Gesamtdicke aus der Schicht (a) und der Schicht (b) höchstens 16 µm, vorzugsweise von 5 bis 15 µm, beträgt.

2. Eine Verpackung nach Anspruch 1, **dadurch gekennzeichnet, dass** die Siegelschicht (a) der Mehrschichtfolie auf wenigstens einem Homopolymeren oder Copolymeren aus Ethylen und/oder Propylen, vorzugsweise auf wenigstens einem Copolymeren aus Propylen und bis 30 Gew.-% Ethylen basiert.

3. Eine Verpackung nach Anspruch 1 oder 2, **dadurch gekennzeichnet, dass** die Siegelschicht (a) mehrlagig, vorzugsweise zweilagig ist.

4. Eine Verpackung nach einem der Ansprüche 1 - 3, **dadurch gekennzeichnet, dass** die Schichtdicke der Siegelschicht (a) wenigstens 50 % der Gesamtdicke der Schicht (a) und der Schicht (b) beträgt.

5. Eine Verpackung nach einem der Ansprüche 1-4, **dadurch gekennzeichnet, dass** die Siegelnahtfestigkeit zwischen dem Deckel und dem Behälter 25 bis 45 N /15 mm beträgt.

6. Eine Verpackung nach einem der Ansprüche 1 bis 5, **dadurch gekennzeichnet, dass** die Siegelschicht (a) mit wenigstens einem Antifog-Additiv ausgerüstet ist.

7. Eine Verpackung nach Anspruch 6, **dadurch gekennzeichnet, dass** die Siegelschicht (a) 1,5 Gew.-% bis 10,0 Gew.-%, vorzugsweise 3,0 Gew.-% bis 6,0 Gew.-%, wenigstens eines Antifog-Additivs. bezogen auf das Gesamtgewicht der Siegelschicht (a), aufweist.

8. Eine Verpackung nach Anspruch 7, **dadurch gekennzeichnet, dass** die Siegelschicht (a) mit wenigstens einem Antifog-Additiv ausgewählt aus der Gruppe umfassend alkoxylierte Amine, alkoxylierte Amide, Polyol-Fettsäureester, vorzugsweise Glycerolfettsäurerester, Ester, vorzugsweise Monoester, von Sorbitan und wenigstens einer Fettsäure, ausgerüstet ist, wobei die Antifog-Wirkung vorzugsweise dauerhaft ist.

9. Eine Verpackung nach Anspruch 7, **dadurch gekennzeichnet, dass** der Anteil des Antifog-Additivs in einer mehrlagigen Siegelschicht (a) von der äußersten Lage zu den weiter innen liegenden Lagen kontinuierlich abnimmt, vorzugsweise nur in der äußersten Lage vorliegt

10. Eine Verpackung nach einem der vorstehenden Ansprüche, **dadurch gekennzeichnet, dass** die Schicht (b) auf einem Homopolymer oder Copolymer aus Ethylen und/oder Propylen, vorzugsweise einem Propylen/Ethylen-Copolymer basiert, das mit organischen Säure-Gruppen und/oder organischen Säureanhydrid-Gruppen, vorzugsweise cyclischen organischen Säureanhydrid-Gruppen modifiziert, vorzugsweise gepfropft ist.

11. Eine Verpackung nach einem der vorstehenden Ansprüche, **dadurch gekennzeichnet, dass** die Barriereschicht (d) eine Gasbarriereschicht, vorzugsweise eine Sauerstoffbarriereschicht, ist, die auf wenigstens einem thermoplastischen Polymeren ausgewählt aus der Gruppe umfassend Ethylen-Vinylalkohol-Copolymere und Vinylidenchlorid-Copolymere, vorzugsweise auf wenigstens einem Ethylen-Vinylalkohol-Copolymeren basiert.

12. Eine Verpackung nach einem der vorstehenden Ansprüche, **dadurch gekennzeichnet, dass** die Schichten (c) und (e) auf wenigstens einem Homo- und/oder Copolyamide ausgewählt aus der Gruppe umfassend thermoplastische, aliphatische, teilaromatische und aromatische Homo- oder Copolyamide, vorzugsweise einem Homo- oder Copolyamid aus einem aliphatischen und/oder cycloaliphatischen Diamin mit 2-10 Kohlenstoffatomen und/oder aromatischen Diamin mit 6-10 Kohlenstoffatomen und aus einer aliphatischen und/oder aromatischen Dicarbonsäure mit 6-14 Kohlenstoffatomen basiert.

13. Eine Verpackung nach einem der vorstehenden Ansprüche, **dadurch gekennzeichnet, dass** die Trägerschicht (h) auf wenigstens einem thermoplastischen Polymeren ausgewählt aus der Gruppe umfassend Olefin-Homo- oder Copolymere, Homo- oder Copolyamide und Homo- oder Copolyester beruht.

14. Eine Verpackung nach einem der vorstehenden Ansprüche, **dadurch gekennzeichnet, dass** der Behälter der Verpackung aus einem vorzugsweise einschichtigen Film aus einem thermoplastischen Polymer ausgewählt aus der Gruppe umfassend einen Homo- und Copolyester, ein Homo- und Copolyamid und ein Olefin-Homo- und Copolymer geformt ist, wobei der Film ggf. eine Siegelschicht (s) basierend auf einem heißsiegelfähigen, thermoplastischen Polymeren, vorzugsweise auf einem Polymermaterial identisch mit der Polymerkomponente der Heißsiegelschicht (a), aufweist.

15. Eine Verpackung nach Anspruch 14, **dadurch gekennzeichnet, dass** der Film und/oder zumindest dessen Siegelschicht (s) auf einem Propylen- und/oder Ethylen-Copolymer basiert.

16. Eine Verpackung nach einem der vorstehenden Ansprüche, **dadurch gekennzeichnet, dass** die Verpackung eine Verpackung für Lebensmittel, vorzugsweise eine Verpackung für verderbliche Lebensmittel, besonders bevorzugt für Frischfleisch ist.

17. Eine Verpackung nach einem der vorstehenden Ansprüche, **dadurch gekennzeichnet, dass** die Verpackung transparent ist.

## Claims

1. An easy-to-open, two-parts packaging, of which the aperture of the container is sealed by a cover made of a preferably transparent multilayer film, comprising a layer sequence of
(a) a sealable optionally multilayer layer (a) which optionally has more than one ply and which is based on at least one heat-sealable thermoplastic olefin homo- and/or copolymer,
(b) a first adhesion-promoter layer (b) based on at least one olefin homo- and/or copolymer modified with polar organic groups to an extent of from 0.03 to 0.5% by weight, preferably from 0.05 to 0.3% by weight, based on the homo- and/or copolymer, and optionally a thermoplastic olefin homo- and/or copolymer, preferably the olefin homo- and/or copolymer of the layer (a),
(c) a layer (c) based on at least one homo- and/or copolyamide,
(d) a barrier layer (d),
(e) a layer (e) based on at least one homo- and/or copolyamide,
(f) optionally a second adhesion-promoter layer (f),
(g) optionally a layer (g) based on at least one thermoplastic olefin homo- and/or copolymer, and
(h) a substrate layer (h) based on at least one thermoplastic polymer,
wherein the quotient of the sealing strength of the seal seam between the cover and the container and of the adhesive strength between layer b) and layer c) is from 1.8 to 4.5, preferably from 1.9 to 3, and the total thickness of layer (a) and layer (b) is at most 16 µm, preferably from 5 to 15 µm.

2. A packaging according to Claim 1, **characterized in that** the sealable layer (a) of the multilayer film is based on at least one homopolymer or copolymer of ethylene and/or propylene, preferably on at least one copolymer of propylene and up to 30% by weight of ethylene.

3. A packaging according to Claim 1 or 2, **characterized in that** the sealable layer (a) has more than one ply, preferably two plies.

4. A packaging according to any one of Claims 1 to 3, **characterized in that** the thickness of the sealable layer (a) amounts to at least 50% of the total thickness of the layer (a) and the layer (b).

5. A packaging according to any of Claims 1 to 4, **characterized in that** the sealing strength of the seal seam between the cover and the container is from 25 to 45 N/15 mm.

6. A packaging according to any of Claims 1 to 5, **characterized in that** the sealable layer (a) contains at least one antifogging additive.

7. A packaging according to Claim 6, **characterized in that** the sealable layer (a) comprises from 1.5% by weight to 10.0% by weight, preferably from 3.0% by weight to 6.0% by weight, based on the total weight of the sealable layer (a) of at least one antifogging additive.

8. A packaging according to Claim 7, **characterized in that** the sealable layer (a) contains at least one antifogging additive selected from the group comprising alkoxylated amines, alkoxylated amides, polyol fatty acid esters, preferably glycerol fatty acid esters, and esters, preferably monoesters, of sorbitan and of at least one fatty acid, whereby the antifogging effect is preferably long-lasting.

9. A packaging according to Claim 7, **characterized in that** the amount of the antifogging additive in a layer, sealable layer (a) which has more than one ply decreases continuously from the outermost layer to the layers arranged further inwards, preferably being present only in the outermost ply.

10. A packaging according to any of the preceding claims, **characterized in that** the layer (b) is based on a homopolymer or copolymer of ethylene and/or propylene, preferably on a propylene/ethylene copolymer which has been modified, preferably grafted, with organic acid groups and/or with organic anhydride groups, preferably with cyclic organic anhydride groups.

11. A packaging according to any of the preceding claims, **characterized in that** the barrier layer (d) is a gas-barrier layer, preferably an oxygen-barrier layer, based on at least one thermoplastic polymer selected from the group comprising ethylene-vinyl alcohol copolymers and vinylidene chloride copolymers, preferably based on at least one ethylene-vinyl alcohol copolymer.

12. A packaging according to any of the preceding claims, **characterized in that** the layers (c) and (e) are based on at least one homo- and/or copolyamide selected from the group comprising thermoplastic, aliphatic, semiaromatic and aromatic homo- and copolyamides, preferably a homo- or copolyamide of an aliphatic and/or cycloaliphatic diamine having from 2 to 10 carbon atoms and/or aromatic diamine having from 6 to 10 carbon atoms and of an aliphatic and/or aromatic dicarboxylic acid having from 6 to 14 carbon atoms.

13. A packaging according to any of the preceding claims, **characterized in that** the substrate layer (h) is based on at least one thermoplastic polymer selected from the group comprising olefin homo- and copolymers, homo- and copolyamides and homo- and copolyesters.

14. A packaging according to any of the preceding claims, **characterized in that** the container of the packaging is formed of a preferably single-layer film of a thermoplastic polymer selected from the group comprising a homopolyester, a copolyester, a homopolyamide, a copolyamide, an olefin homopolymer, and an olefin copolymer, wherein the film optionally comprises a sealable layer (s) based on a heat-sealable, thermoplastic polymer, preferably on a polymer material identical to the polymer component of the heat-sealable layer (a).

15. A packaging according to Claim 14, **characterized in that** the film and/or at least the sealable layer (s) thereof is based on a propylene and/or ethylene copolymer.

16. A packaging according to any of the preceding claims, **characterized in that** the packaging is a packaging for foods, preferably a packaging for perishable foods, particularly preferably for fresh meat.

17. A packaging according to any of the preceding claims, **characterized in that** the packaging is transparent.

## Revendications

1. Emballage en deux parties, facile à ouvrir, dont l'ouverture du contenant est scellée avec un couvercle constitué d'un film multicouche de préférence transparent, qui comprend une succession de couches consistant en
(a) une couche de scellage (a) éventuellement multicouche, à base d'au moins un homopolymère et/ou copolymère d'oléfine thermoplastique thermoscellable,
(b) une première couche de promoteur d'adhérence (b), à base d'au moins un homopolymère et/ou copolymère d'oléfine qui est modifié à raison de 0,03 à 0,5 % en poids, de préférence de 0,05 à 0,3 % en poids, par rapport à l'homopolymère et/ou au copolymère, avec des groupes organiques polaires, et éventuellement d'un homopolymère et/ou copolymère d'oléfine thermoplastique, de préférence l'homopolymère et/ou le copolymère d'oléfine de la couche (a),
(c) une couche (c) à base d'au moins un homopolyamide et/ou copolyamide,
(d) une couche barrière (d),
(e) une couche (e) à base d'au moins un homopolyamide et/ou polyamide,
(f) éventuellement une deuxième couche de promoteur d'adhérence (f),
(g) éventuellement une couche (g) à base d'au moins un homopolymère et/ou copolymère d'oléfine thermoplastique, et
(h) une couche de support (h) à base d'au moins un polymère thermoplastique,
le quotient de la résistance du joint scellé entre le couvercle et le contenant et de l'adhérence de liaison entre la couche b) et la couche c) valant de 1,8 à 4,5, de préférence de 1,9 à 3 et l'épaisseur totale de la couche (a) et de la couche (b) valant au maximum 16 µm, de préférence de 5 à 15 µm.

2. Emballage selon la revendication 1, **caractérisé en ce que** la couche de scellage (a) du film multicouche est à base d'au moins un homopolymère ou copolymère d'éthylène et/ou de propylène, de préférence d'au moins un copolymère de propylène et de jusqu'à 30 % en poids d'éthylène.

3. Emballage selon la revendication 1 ou 2, **caractérisé en ce que** la couche de scellage (a) est multicouche, de préférence bicouche.

4. Emballage selon l'une quelconque des revendications 1 à 3, **caractérisé en ce que** l'épaisseur de couche de la couche de scellage (a) représente au moins 50 % de l'épaisseur totale de la couche (a) et de la couche (b).

5. Emballage selon l'une quelconque des revendications 1 à 4, **caractérisé en ce que** la résistance du joint scellé entre le couvercle et le contenant vaut de 25 à 45 N/15 mm.

6. Emballage selon l'une quelconque des revendications 1 à 5, **caractérisé en ce que** la couche de scellage (a) est munie d'au moins un additif anti-buée.

7. Emballage selon la revendication 6, **caractérisé en ce que** la couche de scellage (a) comporte 1,5 % en poids à 10,0 % en poids, de préférence 3,0 % en poids à 6,0 % en poids, d'au moins un additif anti-buée, par rapport au poids total de la couche de scellage (a).

8. Emballage selon la revendication 7, **caractérisé en ce que** la couche de scellage (a) est munie d'au moins un additif anti-buée choisi dans le groupe comprenant des amines alcoxylées, des amides alcoxylés, des esters d'acides gras avec des polyols, de préférence des esters d'acides gras avec le glycérol, des esters, de préférence des monoesters, de sorbitanne avec au moins un acide gras, l'action de l'anti-buée étant de préférence durable.

9. Emballage selon la revendication 7, **caractérisé en ce que** dans une couche de scellage (a) multicouche la proportion de l'additif anti-buée diminue de la couche la plus externe aux autres couches se trouvant à l'intérieur, de préférence n'est présente que dans la couche la plus externe.

10. Emballage selon l'une quelconque des revendications précédentes, **caractérisé en ce que** la couche (b) est à base d'un homopolymère ou copolymère d'éthylène et/ou de propylène, de préférence d'un copolymère éthylène/propylène qui est modifié, de préférence greffé, avec des groupes acide organique et/ou des groupes anhydride d'acide organique, de préférence des groupes anhydride d'acide organique cyclique.

11. Emballage selon l'une quelconque des revendications précédentes, **caractérisé en ce que** la couche barrière (d) est une couche faisant barrière aux gaz, de préférence une couche faisant barrière à l'oxygène, qui est à base d'au moins un polymère thermoplastique choisi dans le groupe comprenant des copolymère éthylène/alcool vinylique et des copolymères de chlorure de vinylidène, de préférence d'au moins un copolymère éthylène/alcool vinylique.

12. Emballage selon l'une quelconque des revendications précédentes, **caractérisé en ce que** les couches (c) et (e) sont à base d'au moins un homopolyamide et/ou copolyamide, choisi(s) dans le groupe comprenant des homo- ou copolyamides thermoplastiques, aliphatiques, partiellement aromatiques et aromatiques, de préférence d'un homo- ou copolyamide à base d'une diamine aliphatique et/ou cycloaliphatique ayant de 2 à 10 atomes de carbone et/ou d'une diamine aromatique ayant de 6 à 10 atomes de carbone et à base d'un acide dicarboxylique aliphatique et/ou aromatique ayant de 6 à 14 atomes de carbone.

13. Emballage selon l'une quelconque des revendications précédentes, **caractérisé en ce que** la couche de support (h) est à base d'au moins un polymère thermoplastique choisi dans le groupe comprenant des homo- ou copolymères d'oléfines, des homo- ou copolyamides et des homo- ou copolyesters.

14. Emballage selon l'une quelconque des revendications précédentes, **caractérisé en ce que** le contenant de l'emballage est moulé à partir d'un film de préférence monocouche à base d'un polymère thermoplastique choisi dans le groupe comprenant un homo- et copolyester, un homo- et copolyamide et un homo- et copolymère d'oléfine, le film comportant éventuellement une couche de scellage (s) à base d'un polymère thermoplastique thermoscellable, de préférence d'un matériau polymère identique au composant polymère de la couche de thermoscellage (a).

15. Emballage selon la revendication 14, **caractérisé en ce que** le film et/ou au moins sa couche de scellage (s) est à base d'un copolymère d'éthylène et/ou de propylène.

16. Emballage selon l'une quelconque des revendications précédentes, **caractérisé en ce que** l'emballage est un emballage pour produits alimentaires, de préférence un emballage pour produits alimentaires périssables, de façon particulièrement préférée pour viande fraîche.

17. Emballage selon l'une quelconque des revendications précédentes, **caractérisé en ce que** l'emballage est transparent.
